# EUROPEAN PATENT APPLICATION

(11) **EP 4 566 466 A1**
(43) Date of publication of application: **11.06.2025**
(21) Application number: 23214686.0
(22) Date of filing: 06.12.2023
(51) Int. Cl.: A24F 15/01, A24F 40/50, A24F 40/53, A24F 40/65, G06K 19/06, C09D 11/50

(54) **AEROSOL GENERATING APPARATUS COMPRISING AN INFORMATION READER**

(71) Applicant: Imperial Tobacco Limited, Bristol, BS3 2LL (GB)
(72) Inventor: The designation of the inventor has not yet been filed
(74) Representative: Mewburn Ellis LLP

(57) **Abstract**

The present disclosure relates to an aerosol generating apparatus (1). A drawback with known aerosol generating apparatuses is that they lack adaptability of their mode of operation for varying consumables. In spite of the effort already invested in the development of aerosol generating apparatuses/systems further improvements are desirable. Accordingly, the present disclosure provides an aerosol generating apparatus (1) for generating an aerosol from a consumable (70) that comprises a cavity (86) adapted for receiving the consumable (70) and an information reader (80) adapted for reading a machine-readable information (82) arranged outside of the cavity (86) when being read by the information reader (80).

## Description

### FIELD

The present disclosure relates to an aerosol generating apparatus.

### BACKGROUND

A typical aerosol generating apparatus may comprise a power supply, an aerosol generating unit that is driven by the power supply, an aerosol precursor, which in use is aerosolised by the aerosol generating unit to generate an aerosol, and a delivery system for delivery of the aerosol to a user.

A drawback with known aerosol generating apparatuses is that they lack adaptability of their mode of operation for varying consumables.

In spite of the effort already invested in the development of aerosol generating apparatuses/systems further improvements are desirable.

### SUMMARY

In a first aspect, the present disclosure provides an aerosol generating apparatus for generating an aerosol from a consumable that comprises a cavity adapted for receiving a consumable. In some examples, the aerosol generating apparatus comprises an information reader adapted for reading a machine-readable information arranged outside of the cavity when being read by the information reader.

In a second aspect, the present disclosure further provides a set consisting of an aerosol generating apparatus according to the present disclosure and a consumable or a pack of consumables. In some examples, the aerosol generating apparatus is arranged to acquire the machine-readable information from the consumable or the pack of consumables, and to set a mode of operation of the aerosol generating apparatus adapted to the consumable(s) dependent on the machine-readable information.

In a third aspect, the present disclosure further provides a method of operating an aerosol generating apparatus according to the present disclosure. In some examples of the method, the aerosol generating apparatus, upon reading machine-readable information on a consumable or a pack of consumables, is arranged to set a mode of operation of the aerosol generating apparatus adapted to the consumable(s) dependent on the machine-readable information.

The present disclosure further provides a method of operating a set according to the present disclosure, comprising the steps of inserting a consumable comprising machine-readable information in a first state into the cavity of the aerosol generating apparatus, wherein the machine-readable information is unreadable in the first state, initiating a heating or pre-heating operation to apply heat to the consumable so that the machine-readable information transitions from the first state into a second state, wherein the machine-readable information is readable in the second state, removing the consumable from the cavity, and reading the machine-readable information.

The present disclosure further provides a consumable for an aerosol generating apparatus, comprising machine-readable information arranged on the outside of the consumable. In some examples, the machine-readable information is arranged to assume a first state and a second state. The machine-readable information is invisible or unreadable in the first state and is visible or readable in the second state. In some examples, the machine-readable information is arranged to transition from the first state to the second state by application of heat.

The present disclosure relates to an aerosol generating apparatus like a heat-not-burn substitute smoking device that heats smoking material of a consumable, e.g. tobacco material, without burning it. This results in the creation of an aerosol, which can be inhaled by a user. However, another option is for a consumable to provide a liquid precursor such as an e-liquid. The apparatus may have a heating element adapted for heating a consumable for generating an aerosol from the consumable. For example, a consumable may be regularly received in a cavity of the aerosol generating apparatus and heated by a heating element arranged within the cavity. Another option is for each consumable to provide its own heating element. Depending on the type of consumable material, it may be beneficial to adapt the heating process or generally the smoking procedure to the consumable material and/or the preference of the user. It may thus be beneficial to parameterize the operation of the aerosol generating apparatus to specific consumables comprising differing tobacco material or no tobacco material. By adapting the operation of the aerosol generating apparatus, a resulting aerosol may be standardized, in other words, the quality of the aerosol produced may be standardized, so to assure that aerosol generating apparatuses produce a consistent aerosol. Further, by parameterizing the operation of the aerosol generating apparatus, accidental misuse may be reduced. By applying settings that are specific to different types of consumables, the risk of generating unwanted components in the aerosol may be reduced. E.g., in case a particular consumable is heated with an incompatible temperature, unintended and/or unwanted components may be generated. Setting the operation of the aerosol generating apparatus to match a particular consumable may minimize the generation of such components.

Parameterizing the operation of the aerosol generating apparatus may be realized by providing specific parameter information on select parameters like, e.g., heating temperature, heating duration or generally a heating profile to the aerosol generating apparatus or provide information to select a particular set of parameters be stored in the aerosol generating apparatus. In other words, the operation may be parameterized by indicating that a particular mode of operation out of a number of predefined modes of operation is to be selected. The aerosol generating apparatus may comprise an information reader adapted for reading a machine-readable information. The machine-readable information may be any suitable visible marking that can be acquired by the information reader. E.g., the machine-readable information may be a one- or two-dimensional barcode comprising information on the parameters and/or the mode of operation, or it may be a symbol, pattern or the like that conveys the information on the parameters and/or the mode of operation. The information on the parameters may be encoded in the machine-readable information, in particular encrypted, so that only a suitable aerosol generating apparatus adapted to the particular machine-readable information, in particular the encrypted machine-readable information, may decode the content and thus may use the information to parameterize the operation of the aerosol generating apparatus.

The machine-readable information may be provided on a particular consumable, e.g., printed on a part of the outer surface of the consumable, to allow a per-consumable parameterization of the aerosol generating apparatus. Alternatively or additionally, the machine-readable information may be provided on a consumable pack. In the latter case, the machine-readable information may be intended to parameterize the aerosol generating apparatus for any consumable of said pack. In particular, the information reader may read the machine-readable information arranged outside of the cavity. In other words, the information reader may not be arranged to read the machine-readable information inside of the cavity. E.g., in case the machine-readable information is provided on the outside of a consumable, the consumable is not inserted in the cavity when being read. The information reader may be arranged outside of the cavity itself, e.g., integrated into the housing of the aerosol generating apparatus but reading machine readable information outside of the housing, in particular in the vicinity of the housing. Alternatively, or additionally, the same or a further information reader may be arranged in the interior of the cavity that may read a machine-readable information arranged outside of the cavity. In other words, the information reader may acquire machine-readable information through a cavity opening as an opening from the interior of the aerosol generating apparatus to the outside.

The machine-readable information may be a barcode, however, it may have a reduced visual footprint in the sense that the machine-readable information does not need to be a long barcode readout in the traditional sense, but it may e.g., be a dedicated marking or a few lines, e.g., 3 to 4 lines. The machine-readable information may designate genuine consumables from counterfeit consumables or from competitor consumables and may further distinguish different stock keeping units. Dependent on the machine-readable information, the aerosol generating apparatus may then change parameters of the aerosol generating apparatus operation, e.g., the heater profile to match a profile required for a particular type of consumable.

The information reader may be arranged in a bottom or side part of the housing of the aerosol generating apparatus pointing to the outside of the housing through an opening, which may not be an opening of the cavity through which the consumable is received. Further, the information reader may be arranged underneath further elements of the housing or concealed in some way, e.g., by a movable element or lid, arranged for selectively covering the opening of the information reader. A user may thus choose to scan the machine-readable information to unlock and/or set a matching or different heater profile, or a preferred heater profile of the user. It is conceivable that for a particular consumable, a plurality of modes of operation of the aerosol generating apparatus are available. In such a scenario, a user may choose their preferred mode of operation, e.g., a mode of operation intensifying a flavour experience and/or a nicotine delivery. Alternatively or additionally, the machine-readable information may be required to be able to activate the aerosol generating apparatus. In other words, only when a suitable and/or valid machine-readable information has been acquired by the information reader, the aerosol generating apparatus may be operated, i.e., the consumable be consumed. Thereby, it may be avoided to operate the aerosol generating apparatus with a non-genuine consumable or a competitor consumable which does not comprise the machine-readable information. Also, in case the machine-readable information is user specific, the machine-readable information may be employed to assure that the user is of the appropriate age to consume a particular consumable. E.g., consumables comprising tobacco or nicotine may have a legally required minimum age and the user is proving to be of that age by reading the user specific machine-readable information, while consumables comprising flavour only may have no or a different minimum age requirement.

In other words, the user specific information may be indicative of a particular, unique user. A user may have obtained the user-specific machine-readable information through, for example, a validation process that verifies the user's identity, age, and general eligibility to use an aerosol-generating consumable with or without tobacco or nicotine. Such user specific machine-readable information may be provided as a normal machine-readable barcode, e.g., printed on a suitable material like a credit card sized ID card. In another example, the user specific machine-readable information may be presented to the aerosol generating apparatus by electronic means, e.g. by a display of machine-readable information on a screen of a computing device like e.g., a portable computing device, a mobile phone or a smart device. Computing device in turn may acquire the user specific machine-readable information from a user account where information about the user and their consumption eligibility is stored. In another example, the aerosol generating apparatus may be in communicative connection with the computing device, e.g., by wireless connection, and may obtain the user specific information via said connection. The communication connection may be a direct communication connection between the aerosol generating apparatus and the computing device or may employ for the network connectivity e.g., going through the Internet. A direct connection between the aerosol generating apparatus of the computing device may be implemented by a near field communication connection employing e.g., Bluetooth, RFID or NFC technology, or may employ a Wi-Fi, a cellular communication connection or further long-distance communication connections like a LoRaWAN. Also, the computing device may be implemented as a cloud-based service to which the aerosol generating apparatus connects one of the aforementioned communication connection.

In order to activate the aerosol generating apparatus, the user presents the user specific machine-readable information to the aerosol generating apparatus and reads the user specific machine-readable information with the information reader incorporated into the aerosol generating apparatus. This may enable the operation of the aerosol generating apparatus to allow consumable consumption.

The user specific machine-readable information may be indicative of whether a particular user is eligible to consume a specific type of consumable. In one example, the user specific machine-readable information may indicate that the user is eligible to consume any type of consumable, i.e., consumables with and without tobacco or nicotine. In another example, the user specific machine-readable information may indicate that the user is eligible to consume only consumables containing no tobacco or nicotine. In yet another example, the user specific information may indicate that the user is eligible to consume consumables containing, additionally or alternatively, a further consumable substance.

Once the user specific (machine-readable) information has been provided to the aerosol generating apparatus, the user may present the consumable specific machine-readable information, e.g., a barcode on the consumable package and/or on a particular consumable to be consumed, thereby enabling the consumption of the consumable with the aerosol generating apparatus.

Additionally or alternatively, the aerosol generating apparatus may require plural types of machine-readable information to operate with a particular consumable. E.g., a user is reading the machine-readable information of a consumable requiring a certain legal age as a first type of information. In such a scenario, the aerosol generating apparatus may prevent operation until the user acquires, e.g., user specific machine-readable information proving their sufficient age, as a second type of machine-readable information.

In a particular scenario, the aerosol generating apparatus may provide a heating operation or preheating operation to a particular consumable. The machine-readable information on that consumable may only become readable, e.g., visible, after the heating or preheating operation. A user may thus perform the heating or preheating operation to render the machine-readable information readable and may subsequently acquire the machine-readable information to parameterize the operation of the aerosol generating apparatus and/or to activate the operation of the aerosol generating apparatus. In this scenario, the heating or preheating operation may assure that only a genuine consumable and/or consumables intended for use in a particular aerosol generating apparatus may be used, assuming that counterfeit consumables not intended for use do not comprise such a machine-readable information rendered readable after said heating or preheating operation.

An acquired mode of operation through the reading of a particular machine-readable information may be stored within the aerosol generating apparatus and may be selected subsequently without requiring the rereading of the machine-readable information. Thereby, a user may acquire a set of modes of operation specific to their consumable consumption and may consequently switch between said modes without being required to reacquire the machine-readable information every time an according consumable is to be consumed.

According to an embodiment of the present disclosure, the information reader may be arranged inside the cavity and adapted to read a machine-readable information arranged outside of the cavity when being read by the information reader, and/or the information reader may be arranged outside of the cavity.

According to a further embodiment of the present disclosure, the aerosol generating apparatus may comprise a housing, and the information reader may be arranged within the housing and adapted for reading a machine-readable information arranged outside of the housing.

By arranging the information reader inside of such a housing, the elements of the information reader may be protected, so to avoid accidental damage by shielding from external forces like e.g. from pressure from holding the apparatus or a fall event. At the same time, by reading machine-readable information arranged outside of the cavity or even arranged outside of the housing of the aerosol generating apparatus, a user is provided with an uncomplicated way of acquiring the machine-readable information. In particular by avoiding insertion of the consumable into the cavity to read the machine-readable information, a user may easily align the machine-readable information with a field of view of the information reader, e.g. by "showing" the machine-readable information to the information reader.

The housing may comprise a suitable opening through which the information reader acquires the machine-readable information. The information reader thus may have a field of view through the opening to acquire the machine-readable information arranged outside of the housing. An information reader arranged within the housing may thus be protected from external influences e.g., external forces, while providing a straightforward way of acquiring the machine-readable information. The opening may be protected by a suitable protection element. The protection element may be a permanent protection element, e.g., a light transmissive element like a transparent plastic and/or a suitable optical lens. An optical lens in turn may provide a magnifying function and/or may generally facilitate acquisition of the machine-readable information. E.g., the optical lens may widen the field of view at the exterior of the housing while focusing the acquired machine-readable information onto an acquisition element of the information reader, e.g., an image sensor. Additionally or alternatively, the opening may be covered by a movable element e.g., a lid, which is used to selectively cover and uncover the opening in the housing where the information reader is arranged.

According to a further embodiment of the present disclosure, the housing may have a top side, a bottom side, a front side generally oriented toward a user when using the aerosol generating apparatus and a back side, the housing may have a longitudinal direction of extension between the top side to the bottom side of the housing, and the information reader may be arranged within the housing and may have a reading direction that is generally parallel to the direction of longitudinal extension or generally perpendicular to the direction of longitudinal extension, for example the information reader may be arranged at the bottom side of the housing or at the back side of the housing.

According to a further embodiment of the present disclosure, the information reader may be adapted to read machine-readable information while the aerosol generating apparatus is positioned in the hand of a user of the aerosol generating apparatus during normal use.

It may be beneficial to arrange the information reader, in particular the opening of the information reader in the housing at an otherwise unused position of the housing. E.g., the information reader or the opening may be arranged at a bottom end of the housing. The bottom and may be an unused part of the housing or may exhibit a charging port which the information reader or the opening may be arranged adjacent to. It is conceivable that the opening may be comparably small compared to a charging port like USB-C or Micro-USB, thereby not significantly impacting the design freedom for arranging the charging port. It is also conceivable to arrange the information reader and a back side of the housing considering the normal operation of the aerosol generating apparatus. In other words, the opening or the information reader may be arranged pointing away from the user. Thereby, the user may operate the aerosol generating apparatus in a normal manner while at the same time being able to view the consumable and/or the consumable pack comprising the machine-readable information and thus visually confirm an alignment of the machine-readable information with the field of view of the information reader. Thereby, acquisition of the machine-readable information may be facilitated.

It may in particular be beneficial to allow acquisition of the machine-readable information in a situation where the user is holding the aerosol generating apparatus in a normal way as intended by the manufacturer. Thereby, the user is not required to specifically adapt their way of operating the aerosol generating apparatus when acquiring the machine-readable information. In this regard, a field of view pointing from the back side or the bottom side of the aerosol generating apparatus may be preferred. In case the aerosol generating apparatus comprises a visual indicator for indicating (successful) acquisition of the machine-readable information and/or an activation element to initiate acquisition of the machine-readable information, such may be provided on the front side of the aerosol generating apparatus and thus, e.g., opposing a field of view arranged on the back side of the housing.

Normal use may in particular be understood as a way of holding or operating the aerosol generating apparatus in a usual or intended way, in particular but not limited to a situation where a consumable is consumed. In other words, acquiring the machine-readable information during normal use should be understood as the ability of the information reader to read or acquire the machine-readable information without requiring a particular extraordinary action or behaviour by the user. E.g., an information reader that is arranged at a position of the housing that is not covered by a body part of the user when holding or operating the aerosol generating apparatus while preparing or in the process of consuming a consumable can be assumed to be able to acquire the machine-readable information during said normal use. According to a further embodiment of the present disclosure, the aerosol generating apparatus may be adapted to set a mode of operation dependent on reading the machine-readable information.

The machine-readable information may comprise information that is adapted to parameterize the operation of the aerosol generating apparatus. In other words, one, some or all operational parameters of the aerosol generating apparatus may be set from the acquired machine-readable information after acquisition. The machine-readable information may itself comprise the parameters, e.g., the values of said parameters, which are set, or may comprise information corresponding to a (pre-set) set of information. In other words, the machine-readable information may itself comprise values that the aerosol generating apparatus then uses to set the mode of operation or may acquire information about a previously stored set of parameters and may then set those parameters/values, i.e., the mode of operation, from the previously stored set of parameters/values. Acquiring a pre-set set of information, in particular without acquiring the actual values for said parameters, may avoid a situation where the information reader acquires a wrong value and subsequently the aerosol generating apparatus uses said incorrect value to set a mode of operation. The reuse of one or more incorrect values may result in an unstable mode of operation or may in a worst-case scenario damage the aerosol generating apparatus and/or may initiate a heating profile that is incompatible with a particular consumable.

The information for setting a mode of operation may be encoded, in particular encrypted, in the machine-readable information. Additionally or alternatively, an error correction code may be employed to recognize and preferably correct incorrectly acquired information. Thereby, it may be avoided that incorrect information, i.e., incorrect values, are used when setting a mode of operation.

According to a further embodiment of the present disclosure, the aerosol generating apparatus may be adapted to store the read information or information for setting a mode of operation acquired by reading the machine-readable information.

Once the aerosol generating apparatus has acquired a set of information which allows the setting of a mode of operation, said information may be stored in the aerosol generating apparatus for subsequent, later use. Thereby, a user may not be required to re-acquire the machine-readable information every time for a particular type of consumable. Rather, they may rely on a previously acquired set of information to parameterize the mode of operation of the aerosol generating device. E.g., a user may only be required to acquire the machine-readable information for a particular pack of consumables when starting the consumption of said pack of consumables. It may thus be avoided, assuming that the consumables are not changed, to be required to reacquire the machine-readable information every time the user is about to start a smoking cycle. For example, in case a pack of consumables comprises 20 consumables, a user may only be required to scan the machine-readable information once at the beginning of the consumption of said 20 consumables and may continue to use the aerosol generating apparatus, set to the mode of operation for said pack of consumables, substantially indefinitely until a rescan of the machine-readable information is required, e.g., when changing the consumable type.

According to a further embodiment of the present disclosure, the aerosol generating apparatus may be arranged so that different modes of operation are selectable, for example modes of operation acquired by reading the machine-readable information.

The aerosol generating apparatus may thus comprise a selecting element a particular mode of operation from a plurality of modes of operation. Alternatively or additionally, the selecting element, e.g., a button, may select a pre-said number of parameters to be used for setting a particular mode of operation. Thereby, a user may easily and quickly adapt the mode of operation of the aerosol generating apparatus to a particular type of consumable.

According to a further embodiment of the present disclosure, a consumable may comprise machine-readable information in a first state where the machine-readable information may be unreadable by the information reader, and the machine-readable information may be arranged to transition to a second state where it may be readable by the information reader by application of heat, for example by a heating or pre-heating process, when the consumable is inserted in the cavity.

In order to provide the heating or pre-heating process to the consumable when inserted in the cavity, the aerosol generating apparatus may comprise a heating element in the interior of the cavity. The heating element may be the same as a heating element adapted for heating the consumable for generating an aerosol from a consumable or may be a separate or additional heating element, arranged within or outside of the cavity. Additionally, or alternatively, the heating element(s) may comprise a plurality of modes of heating that are different when heating or pre-heating consumables, and particularly distinct to the heating mode used for generating aerosol from the consumable. E.g., in the pre-heating mode, the consumable may be heated to a temperature that is below, for example significantly below, the temperature to which the consumable is heated during conventional consumption of the consumable.

According to a further embodiment of the present disclosure, the machine-readable information may be indicative of a mode of operation of the aerosol generating apparatus, and/or of whether the consumable is counterfeit or genuine.

According to a further embodiment of the present disclosure, after reading the machine-readable information, the aerosol generating apparatus may set a mode of operation, and/or, after reading the machine-readable information, the aerosol generating apparatus, may enable activation of the operation of the aerosol generating apparatus.

The machine-readable information may thus be, at first, unreadable, e.g., invisible. This may be achieved by using, e.g., heat-sensitive or heat-reactive ink, for example citric acid or a thermochromic ink. In order to render the machine-readable information visible or generally readable to be acquired by the information reader, the consumable, in particular the machine-readable information may be subject to a heating process. The heating process to render the machine-readable information readable or visible may employ a heat source, e.g., the heating element of the aerosol generating apparatus, or the machine-readable information, in particular the ink used, may be arranged to change visibility, readability and/or colour with body heat, e.g., through touch, and without the need for actual resistive or IR heating to activate the transitioning of the machine-readable information from the first state to the second state. This way, a machine-readable information may be activated, i.e., rendered readable/visible on the consumable and/or the consumable package, through touching the region where the machine-readable information is arranged by the user and transferring body-heat to the machine-readable information.

Only after rendering the machine-readable information readable, the information reader is able to acquire it. Thereby, a user may be required to subject every consumable to said heating or preheating process prior to consumption. Different heating or preheating processes may be available dependent on a particular type of consumable. E.g., a consumable comprising nicotine may require a preheating process having a higher temperature than for example a consumable comprising no nicotine or flavour only. A particular aerosol generating apparatus may be provided with a particular or a plurality of preheating operations thereby assuring that only consumables suitable for said aerosol generating apparatus can be preheated appropriately to display the machine-readable information after that preheating process. In other words, in case an aerosol generating apparatus is unable to appropriately preheat a particular consumable, that a consumable may not be consumed by said aerosol generating apparatus.

In case a particular consumable does not exhibit a machine-readable information after said preheating process or a particular preheating process, such a consumable may potentially be a counterfeit product since it does not exhibit said heat sensitive ink.

Without providing such a machine-readable information after a preheating process, the aerosol generating apparatus may not be activated to consume said consumable. Alternatively or additionally, the aerosol generating apparatus may only be activated in a particular subset of modes of operation. For example, a consumable comprising no nicotine may exhibit particular machine-readable information after said preheating process and an aerosol generating apparatus may acquire the machine-readable information and adapt its mode of operation accordingly. E.g., by verifying that a particular consumable indeed is a nicotine free consumable, a heating operation may be initiated more liberally. On the other hand, in case the consumable shows machine-readable information indicating a consumable comprising nicotine or alternatively does not show machine-readable information, the aerosol generating apparatus may require further verification that a particular user is indeed authorized to consume set consumable, comprising nicotine. Like before, a determination that a consumable comprises nicotine may require a further acquisition of machine-readable information indicating that a particular user has the legal age required to consume a consumable comprising nicotine.

The heat during the preheating operation may only be applied locally, i.e., not over an extended area of the consumable so to avoid accidental heating of the consumable material prior to its intended consumption. In other words, local application of the heat may comprise applying the heat only to a comparably small region of the consumable. In order to realize a local application, only a comparably small region within the cavity may be heated during the heating or pre-heating process to render the machine-readable information readable. The region may coincide with the area heated during normal aerosol-generating heating, or may be a different region.

Alternatively, or additionally, local application may be understood as a limited application of heat, where the heat impact is limited not or not only by the area the heat is applied to, but also by using a limited temperature, in particular a temperature that is lower than the temperature used when generating aerosol from the consumable. In particular, the temperature may be significantly lower and in the range of 35°C, 40°C, 45°C or 50°C to 70°C, 80°C, 90°C or 100°C, thus in a region that may be generated by a user themselves, e.g., by applying body heat or by applying heat generated by friction of a body part, e.g., a thumb, to the aera where the machine-readable information is located. The area where the machine-readable information is located may in turn be indicated by a visible marking, e.g., a frame or similar, surrounding the area where the machine-readable information is arranged.

Still further, the limited application of heat may be a time-limited application, where heat is only applied to the region of the machine-readable information for a short, limited duration. Such a duration bay be in the range of less than 10s, less than 9s, less than 8s, less than 7s, less than 6s, less than 5s, less than 4s, less than 3s, less than 2s or around 1s.

The preceding summary is provided for purposes of summarizing some examples to provide a basic understanding of aspects of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features, aspects, and advantages of the subject matter described herein will become apparent from the following text and the accompanying drawings.

### BRIEF DESCRIPTION OF THE FIGURES

Aspects, features and advantages of the present disclosure will become apparent from the following description of examples in reference to the appended drawings in which like numerals denote like elements.
**Fig. 1** is a block system diagram showing an example aerosol generating apparatus.
**Fig. 2** is a block system diagram showing an example implementation of the apparatus of Fig. 1, where the aerosol generating apparatus is configured to generate aerosol from a liquid precursor.
**Figs. 3A and 3B** are schematic diagrams showing an example implementation of the apparatus of Fig. 2.
**Fig. 4** is a block system diagram showing an example implementation of the apparatus of Fig. 1, where the aerosol generating apparatus is configured to generate aerosol from a solid precursor.
**Fig. 5** is a schematic diagram showing an example implementation of the apparatus of Fig. 4.
**Fig. 6 to 8** are an exemplary embodiments showing an example aerosol generating apparatus according to the present disclosure.
**Fig. 9** is an exemplary embodiment showing a user holding an example aerosol generating apparatus during normal use and acquiring machine-readable information according to the present disclosure.
**Fig. 10** is an exemplary embodiment of a method of operating a set according to the present disclosure.
**Fig. 11** is an exemplary embodiment of an aerosol generating apparatus with communication capability according to the present disclosure.

### DETAILED DESCRIPTION OF EMBODIMENTS

Before describing several examples implementing the present disclosure, it is to be understood that the present disclosure is not limited by specific construction details or process steps set forth in the following description and accompanying drawings. Rather, it will be apparent to those skilled in the art having the benefit of the present disclosure that the systems, apparatuses and/or methods described herein could be embodied differently and/or be practiced or carried out in various alternative ways.

Unless otherwise defined herein, scientific and technical terms used in connection with the presently disclosed inventive concept(s) shall have the meanings that are commonly understood by those of ordinary skill in the art, and known techniques and procedures may be performed according to conventional methods well known in the art and as described in various general and more specific references that may be cited and discussed in the present specification.

Any patents, published patent applications, and non-patent publications mentioned in the specification are hereby incorporated by reference in their entirety.

All examples implementing the present disclosure can be made and executed without undue experimentation in light of the present disclosure. While particular examples have been described, it will be apparent to those of skill in the art that variations may be applied to the systems, apparatus, and/or methods and in the steps or in the sequence of steps of the methods described herein without departing from the concept, spirit, and scope of the inventive concept(s). All such similar substitutions and modifications apparent to those skilled in the art are deemed to be within the spirit, scope, and concept of the inventive concept(s) as defined by the appended claims.

The use of the term "a" or "an" in the claims and/or the specification may mean "one," as well as "one or more," "at least one," and "one or more than one." As such, the terms "a," "an," and "the," as well as all singular terms, include plural referents unless the context clearly indicates otherwise. Likewise, plural terms shall include the singular unless otherwise required by context.

The use of the term "or" in the present disclosure (including the claims) is used to mean an inclusive "and/or" unless explicitly indicated to refer to alternatives only or unless the alternatives are mutually exclusive. For example, a condition "A or B" is satisfied by any of the following: A is true (or present) and B is false (or not present), A is false (or not present) and B is true (or present), and both A and B are true (or present).

As used in this specification and claim(s), the words "comprising, "having," "including," or "containing" (and any forms thereof, such as "comprise" and "comprises," "have" and "has," "includes" and "include," or "contains" and "contain," respectively) are inclusive or open-ended and do not exclude additional, unrecited elements or method steps.

Unless otherwise explicitly stated as incompatible, or the physics or otherwise of the embodiments, examples, or claims prevent such a combination, the features of examples disclosed herein, and of the claims, may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of example(s), embodiment(s), or dependency of claim(s). Moreover, this also applies to the phrase "in one embodiment," "according to an embodiment," and the like, which are merely a stylistic form of wording and are not to be construed as limiting the following features to a separate embodiment to all other instances of the same or similar wording. This is to say, a reference to `an,' 'one,' or 'some' embodiment(s) may be a reference to any one or more, and/or all embodiments, or combination(s) thereof, disclosed. Also, similarly, the reference to "the" embodiment may not be limited to the immediately preceding embodiment. Further, all references to one or more embodiments or examples are to be construed as non-limiting to the claims.

The present disclosure may be better understood in view of the following explanations, wherein the terms used that are separated by "or" may be used interchangeably:
As used herein, an **"aerosol generating apparatus"** (or **"electronic(e)-cigarette"**) may be an apparatus configured to deliver an aerosol to a user for inhalation by the user. The apparatus may additionally/alternatively be referred to as a "smoking substitute apparatus", if it is intended to be used instead of a conventional combustible smoking article. As used herein a combustible "smoking article" may refer to a cigarette, cigar, pipe or other article, that produces smoke (an aerosol comprising solid particulates and gas) via heating above the thermal decomposition temperature (typically by combustion and/or pyrolysis). An aerosol generated by the apparatus may comprise an aerosol with particle sizes of 0.2 - 7 microns, or less than 10 microns, or less than 7 microns. This particle size may be achieved by control of one or more of: heater temperature; cooling rate as the vapour condenses to an aerosol; flow properties including turbulence and velocity. The generation of aerosol by the aerosol generating apparatus may be controlled by an input device. The input device may be configured to be user-activated and may for example include or take the form of an actuator (e.g. actuation button) and/or an airflow sensor.

Each occurrence of the aerosol generating apparatus being caused to generate aerosol for a period of time (which may be variable) may be referred to as an **"activation"** of the aerosol generating apparatus. The aerosol generating apparatus may be arranged to allow an amount of aerosol delivered to a user to be varied per activation (as opposed to delivering a fixed dose of aerosol), e.g. by activating an aerosol generating unit of the apparatus for a variable amount of time, e.g. based on the strength/duration of a draw of a user through a flow path of the apparatus (to replicate an effect of smoking a conventional combustible smoking article).

The aerosol generating apparatus may be portable. As used herein, the term **"portable"** may refer to the apparatus being for use when held by a user.

As used herein, an **"aerosol generating system"** may be a system that includes an aerosol generating apparatus and optionally other circuitry/components associated with the function of the apparatus, e.g. one or more external devices and/or one or more external components (here "external" is intended to mean external to the aerosol generating apparatus). As used herein, an "external device" and "external component" may include one or more of a: a charging device, a mobile device (which may be connected to the aerosol generating apparatus, e.g. via a wireless or wired connection); a networked-based computer (e.g. a remote server); a cloud-based computer; any other server system.

An example aerosol generating system may be a system for managing an aerosol generating apparatus. Such a system may include, for example, a mobile device, a network server, as well as the aerosol generating apparatus.

As used herein, an **"aerosol"** may include a suspension of precursor, including as one or more of: solid particles; liquid droplets; gas. Said suspension may be in a gas including air. An aerosol herein may generally refer to/include a vapour. An aerosol may include one or more components of the precursor.

As used herein, a **"precursor"** may include one or more of a: liquid; solid; gel; loose leaf material; other substance. The precursor may be processed by an aerosol generating unit of an aerosol generating apparatus to generate an aerosol. The precursor may include one or more of: an active component; a carrier; a flavouring. The active component may include one or more of nicotine; caffeine; a cannabidiol oil; a non-pharmaceutical formulation, e.g. a formulation which is not for treatment of a disease or physiological malfunction of the human body. The active component may be carried by the carrier, which may be a liquid, including propylene glycol and/or glycerine. The term "flavouring" may refer to a component that provides a taste and/or a smell to the user. The flavouring may include one or more of: Ethylvanillin (vanilla); menthol, Isoamyl acetate (banana oil); or other. The precursor may include a substrate, e.g. reconstituted tobacco to carry one or more of the active component; a carrier; a flavouring.

As used herein, a **"storage portion"** may be a portion of the apparatus adapted to store the precursor. It may be implemented as fluid-holding reservoir or carrier for solid material depending on the implementation of the precursor as defined above.

As used herein, a **"flow path"** may refer to a path or enclosed passageway through an aerosol generating apparatus, e.g. for delivery of an aerosol to a user. The flow path may be arranged to receive aerosol from an aerosol generating unit. When referring to the flow path, upstream and downstream may be defined in respect of a direction of flow in the flow path, e.g. with an outlet being downstream of an inlet.

As used herein, a **"delivery system"** may be a system operative to deliver an aerosol to a user. The delivery system may include a mouthpiece and a flow path.

As used herein, a **"flow"** may refer to a flow in a flow path. A flow may include aerosol generated from the precursor. The flow may include air, which may be induced into the flow path via a puff by a user.

As used herein, a **"puff"** (or **"inhale"** or **"draw"**) by a user may refer to expansion of lungs and/or oral cavity of a user to create a pressure reduction that induces flow through the flow path.

As used herein, an **"aerosol generating unit"** may refer to a device configured to generate an aerosol from a precursor. The aerosol generating unit may include a unit to generate a vapour directly from the precursor (e.g. a heating system or other system) or an aerosol directly from the precursor (e.g. an atomiser including an ultrasonic system, a flow expansion system operative to carry droplets of the precursor in the flow without using electrical energy or other system). A plurality of aerosol generating units to generate a plurality of aerosols (for example, from a plurality of different aerosol precursors) may be present in an aerosol generating apparatus.

As used herein, a **"heating system"** may refer to an arrangement of at least one heating element, which is operable to aerosolise a precursor once heated. The at least one heating element may be electrically resistive to produce heat from the flow of electrical current therethrough. The at least one heating element may be arranged as a susceptor to produce heat when penetrated by an alternating magnetic field. The heating system may be configured to heat a precursor to below 300 or 350 degrees C, including without combustion.

As used herein, a **"consumable"** may refer to a unit that includes a precursor. The consumable may include an aerosol generating unit, e.g. it may be arranged as a cartomizer. The consumable may include a mouthpiece. The consumable may include an information carrying medium. With liquid or gel implementations of the precursor, e.g. an e-liquid, the consumable may be referred to as a "capsule" or a "pod" or an "e-liquid consumable". The capsule/pod may include a storage portion, e.g. a reservoir or tank, for storage of the precursor. With solid material implementations of the precursor, e.g. tobacco or reconstituted tobacco formulation, the consumable may be referred to as a "stick" or "package" or "heat-not-burn consumable". In a heat-not-burn consumable, the mouthpiece may be implemented as a filter and the consumable may be arranged to carry the precursor. The consumable may be implemented as a dosage or pre-portioned amount of material, including a loose-leaf product.

As used herein, an **"information carrying medium"** may include one or more arrangements for storage of information on any suitable medium. Examples include: a computer readable medium; a Radio Frequency Identification (RFID) transponder; codes encoding information, such as optical (e.g. a bar code or QR code) or mechanically read codes (e.g. a configuration of the absence or presents of cut-outs to encode a bit, through which pins or a reader may be inserted).

As used herein **"heat-not-burn"** (or **"HNB"** or **"heated precursor"**) may refer to the heating of a precursor, typically tobacco, without combustion, or without substantial combustion (i.e. localised combustion may be experienced of limited portions of the precursor, including of less than 5% of the total volume).

As used herein, **"electrical circuitry"** may refer to one or more electrical components, examples of which may include: an Application Specific Integrated Circuit (ASIC); electronic/electrical componentry (which may include combinations of transistors, resistors, capacitors, inductors etc); one or more processors; a non-transitory memory (e.g. implemented by one or more memory devices), that may store one or more software or firmware programs; a combinational logic circuit; interconnection of the aforesaid. The electrical circuitry may be located entirely at the apparatus, or distributed between the apparatus and/or on one or more external devices in communication with the apparatus, e.g. as part of a system

As used herein, a **"processing resource"** (or **"processor"** or **"controller"**) may refer to one or more units for processing data, examples of which may include an ASIC, microcontroller, FPGA, microprocessor, digital signal processor (DSP) capability, state machine or another suitable component. A processing resource may be configured to execute a computer program, e.g. which may take the form of machine-readable instructions, which may be stored on a non-transitory memory and/or programmable logic. The processing resource may have various arrangements corresponding to those discussed for the circuitry, e.g. on-board and/or off board the apparatus as part of the system. As used herein, any machine executable instructions, or computer readable media, may be configured to cause a disclosed method to be carried out, e.g. by an aerosol generating apparatus or system as disclosed herein, and may therefore be used synonymously with the term method.

As used herein, an **"external device"** (or **"peripheral device**") may include one or more electronic components external to an aerosol generating apparatus. Those components may be arranged at the same location as the aerosol generating apparatus or remote from the apparatus. An external device may comprise electronic computer devices including: a smartphone; a PDA; a video game controller; a tablet; a laptop; or another like device.

As used herein, a **"computer readable medium/media"** (or **"memory"** or **"data storage"**) may include any medium capable of storing a computer program and may take the form of any conventional non-transitory memory, for example one or more of: random access memory (RAM); a CD; a hard drive; a solid-state drive; a memory card; a DVD. The memory may have various arrangements corresponding to those discussed for the circuitry /processor. The present disclosure includes a computer readable medium configured to cause an apparatus or system disclosed herein to perform a method as disclosed herein.

As used herein, a **"communication resource"** (or **"communication interface"**) may refer to hardware and/or firmware for electronic information/data transfer. The communication resource may be configured for wired communication ("wired communication resources") or wireless communication ("wireless communication resource"). Wireless communication resources may include hardware to transmit and receive signals by radio and may include various protocol implementations e.g. the 802.11 standard described in the Institute of Electronics Engineers (IEEE) and Bluetooth^{™} from the Bluetooth Special Interest Group of Kirkland Wash. Wired communication resources may include; Universal Serial Bus (USB); High-Definition Multimedia Interface (HDMI) or other protocol implementations. The apparatus may include communication resources for wired or wireless communication with an external device.

As used herein, a **"network"** (or **"computer network**") may refer to a system for electronic information/data transfer between a plurality of apparatuses/devices. The network may, for example, include one or more networks of any type, which may include: a Public Land Mobile Network (PLMN); a telephone network (e.g. a Public Switched Telephone Network (PSTN) and/or a wireless network); a local area network (LAN); a metropolitan area network (MAN); a wide area network (WAN); an Internet Protocol Multimedia Subsystem (IMS) network; a private network; the Internet; an intranet.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving electromagnetic (e.g. radio) waves. Therefore, for example, a chip or other device or component for realizing embodiments could generate data for output to another chip, device or component, or have as an input data from another chip, device, or component, and such an output or input could be referred to as "transmit" and "receive" including gerund forms, that is, "transmitting" and "receiving," as well as such "transmitting" and "receiving" within an RF context.

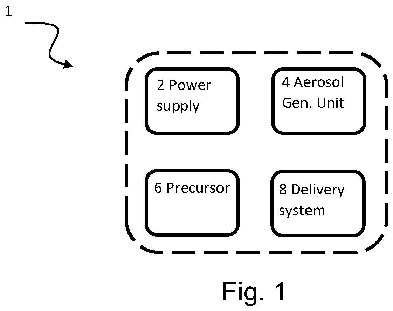

Referring to Fig. 1, an example aerosol generating apparatus 1 includes a power supply 2, for supply of electrical energy. The apparatus 1 includes an aerosol generating unit 4 that is driven by the power supply 2. The power supply 2 may include an electric power supply in the form of a battery and/or an electrical connection to an external power source. The apparatus 1 includes a precursor 6, which in use is aerosolised by the aerosol generating unit 4 to generate an aerosol. The apparatus 1 includes a delivery system 8 for delivery of the aerosol to a user.

Electrical circuitry (not shown in Fig. 1) may be implemented to control the interoperability of the power supply 4 and aerosol generating unit 6.

In variant examples, which are not illustrated, the power supply 2 may be omitted since, e.g. an aerosol generating unit implemented as an atomiser with flow expansion may not require a power supply.

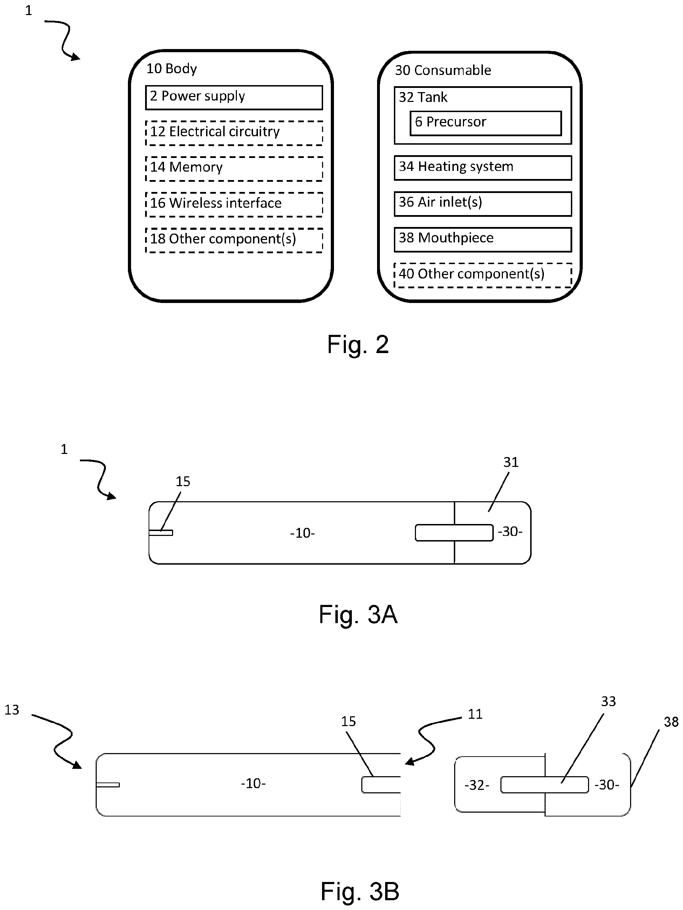

Fig. 2 shows an implementation of the apparatus 1 of Fig. 1, where the aerosol generating apparatus 1 is configured to generate aerosol from a liquid precursor.

In this example, the apparatus 1 includes a device body 10 and a consumable 30.

In this example, the body 10 includes the power supply 4. The body may additionally include any one or more of electrical circuitry 12, a memory 14, a wireless interface 16, one or more other components 18. The electrical circuitry 12 may include a processing resource for controlling one or more operations of the body 10 and consumable 30, e.g. based on instructions stored in the memory 14.

The wireless interface 16 may be configured to communicate wirelessly with an external (e.g. mobile) device, e.g. via Bluetooth.

The other component(s) 18 may include one or more user interface devices configured to convey information to a user and/or a charging port, for example (see e.g. Fig. 3).

The consumable 30 includes a storage portion implemented here as a tank 32 which stores the liquid precursor 6 (e.g. e-liquid). The consumable 30 also includes a heating system 34, one or more air inlets 36, and a mouthpiece 38. The consumable 30 may include one or more other components 40.

The body 10 and consumable 30 may each include a respective electrical interface (not shown) to provide an electrical connection between one or more components of the body 10 with one or more components of the consumable 30. In this way, electrical power can be supplied to components (e.g. the heating system 34) of the consumable 30, without the consumable 30 needing to have its own power supply.

In use, a user may activate the aerosol generating apparatus 1 when inhaling through the mouthpiece 38, i.e. when performing a puff. The puff, performed by the user, may initiate a flow through a flow path in the consumable 30 which extends from the air inlet(s) 34 to the mouthpiece 38 via a region in proximity to the heating system 34.

Activation of the aerosol generating apparatus 1 may be initiated, for example, by an airflow sensor in the body 10 which detects airflow in the aerosol generating apparatus 1 (e.g. caused by a user inhaling through the mouthpiece), or by actuation of an actuator included in the body 10. Upon activation, the electrical circuitry 12 (e.g. under control of the processing resource) may supply electrical energy from the power supply 2 to the heating system 34 which may cause the heating system 32 to heat liquid precursor 6 drawn from the tank to produce an aerosol which is carried by the flow out of the mouthpiece 38.

In some examples, the heating system 34 may include a heating filament and a wick, wherein a first portion of the wick extends into the tank 32 in order to draw liquid precursor 6 out from the tank 32, wherein the heating filament coils around a second portion of the wick located outside the tank 32. The heating filament may be configured to heat up liquid precursor 6 drawn out of the tank 32 by the wick to produce the aerosol. In this example, the aerosol generating unit 4 is provided by the above-described heating system 34 and the delivery system 8 is provided by the above-described flow path and mouthpiece 38.

In variant embodiments (not shown), any one or more of the precursor 6, heating system 34, air inlet(s) 36 and mouthpiece 38, may be included in the body 10. For example, the mouthpiece 36 may be included in the body 10 with the precursor 6 and heating system 32 arranged as a separable cartomizer.

Figs. 3A and 3B show an example implementation of the aerosol generating apparatus 1 of Fig. 2. In this example, the consumable 30 is implemented as a capsule/pod, which is shown in Fig. 3A as being physically coupled to the body 10 and is shown in Fig. 3B as being decoupled from the body 10.

In this example, the body 10 and the consumable 30 are configured to be physically coupled together by pushing the consumable 30 into an aperture in a top end 11 the body 10, with the consumable 30 being retained in the aperture via an interference fit.

In other examples (not shown), the body 10 and the consumable 30 could be physically coupled together in other ways, e.g. by screwing one onto the other, through a bayonet fitting, or through a snap engagement mechanism, for example.

The body 10 also includes a charging port (not shown) at a bottom end 13 of the body 10.

The body 10 also includes a user interface device configured to convey information to a user. Here, the user interface device is implemented as a light 15, which may e.g. be configured to illuminate when the apparatus 1 is activated. Other user interface devices are possible, e.g. to convey information haptically or audibly to a user.

In this example, the consumable 30 has an opaque cap 31, a translucent tank 32 and a translucent window 33. When the consumable 30 is physically coupled to the body 10 as shown in Fig. 3A, only the cap 31 and window 33 can be seen, with the tank 32 being obscured from view by the body 10. The body 10 includes a slot 15 to accommodate the window 33. The window 33 is configured to allow the amount of liquid precursor 6 in the tank 32 to be visually assessed, even when the consumable 30 is physically coupled to the body 10.

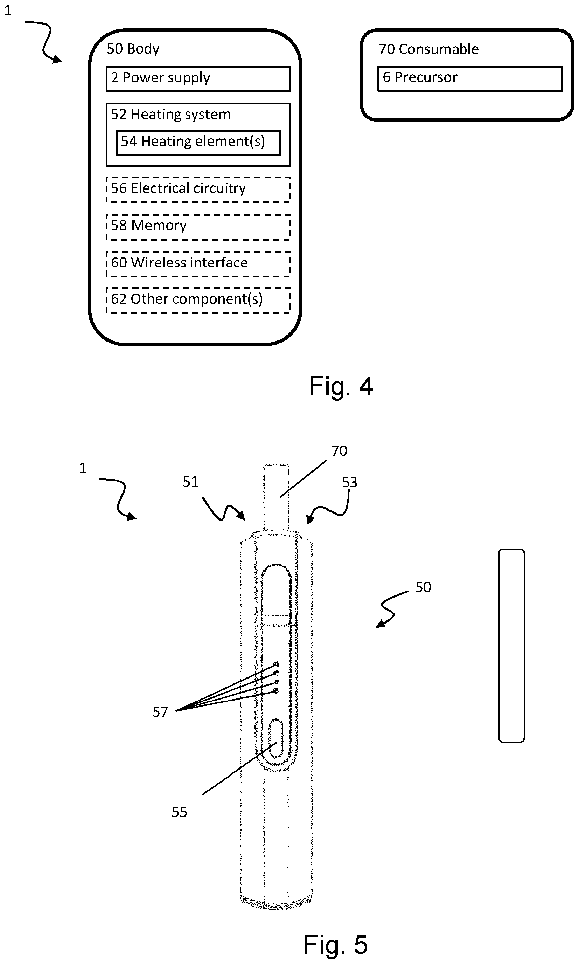

Fig. 4 shows an implementation of the apparatus 1 of Fig. 1, where the aerosol generating apparatus 1 is configured to generate aerosol by a-heat not-burn process.

In this example, the apparatus 1 includes a device body 50 with a housing and a consumable 70.

In this example, the body 50 includes the power supply 4 and a heating system 52. The heating system 54 includes at least one heating element 54. The body may additionally include any one or more of electrical circuitry 56, a memory 58, a wireless interface 60, one or more other components 62.

The electrical circuitry 56 may include a processing resource for controlling one or more operations of the body 50, e.g. based on instructions stored in the memory 58.

The wireless interface 60 may be configured to communicate wirelessly with an external (e.g. mobile) device, e.g. via Bluetooth.

The other component(s) 62 may include an actuator, one or more user interface devices configured to convey information to a user and/or a charging port, for example (see e.g. Fig. 5).

The body 50 is configured to engage with the consumable 70 such that the at least one heating element 54 of the heating system 52 penetrates into the solid precursor 6 of the consumable. In use, a user may activate the aerosol generating apparatus 1 to cause the heating system 52 of the body 50 to cause the at least one heating element 54 to heat the solid precursor 6 of the consumable (without combusting it) by conductive heat transfer, to generate an aerosol which is inhaled by the user.

Fig. 5 shows an example implementation of the aerosol generating apparatus 1 of Fig. 4.

As depicted in Fig. 5, the consumable 70 is implemented as a stick, which is engaged with the body 50 by inserting the stick into an aperture or cavity at a top end 53 of the body 50, which causes the at least one heating element 54 of the heating system 52 to penetrate into the solid precursor 6.

The consumable 70 includes the solid precursor 6 proximal to the body 50, and a filter distal to the body 50. The filter serves as the mouthpiece of the consumable 70 and thus the apparatus 1 as a whole. The solid precursor 6 may be a reconstituted tobacco formulation.

In this example, the at least one heating element 54 is a rod-shaped element with a circular transverse profile. Other heating element shapes are possible, e.g. the at least one heating element may be blade-shaped (with a rectangular transverse profile) or tube-shaped (e.g. with a hollow transverse profile).

In this example, the body 50 includes a cap 51. In use the cap 51 is engaged at a top end 53 of the body 50. Although not apparent from Fig. 5, the cap 51 is moveable relative to the body 50. In particular, the cap 51 is slidable and can slide along a longitudinal axis of the body 50.

The body 50 also includes an actuator 55 on an outer surface of the body 50. In this example, the actuator 55 has the form of a button.

The body 50 also includes a user interface device configured to convey information to a user. Here, the user interface device is implemented as a plurality of lights 57, which may e.g. be configured to illuminate when the apparatus 1 is activated and/or to indicate a charging state of the power supply 4. Other user interface devices are possible, e.g. to convey information haptically or audibly to a user.

The body may also include an airflow sensor which detects airflow in the aerosol generating apparatus 1 (e.g. caused by a user inhaling through the consumable 70). This may be used to count puffs, for example. In this example, the consumable 70 includes a flow path which transmits aerosol generated by the at least one heating element 54 to the mouthpiece of the consumable.

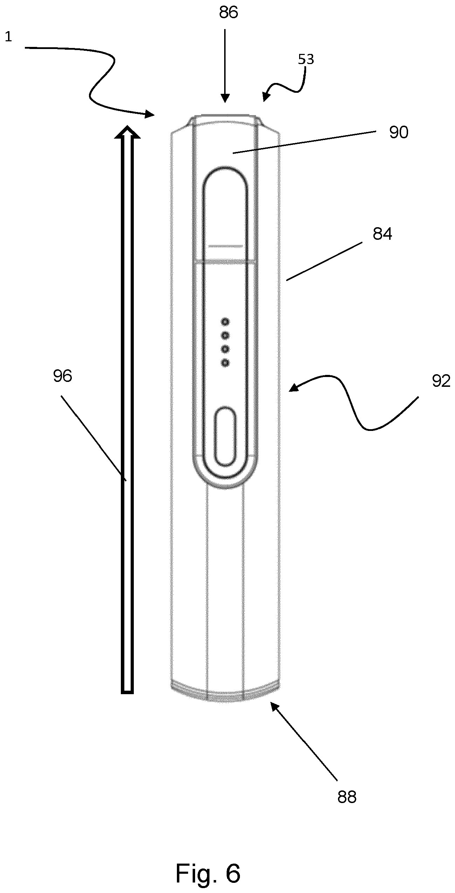

In this example, the aerosol generating unit 4 is provided by the above-described heating system 52 and the delivery system 8 is provided by the above-described flow path and mouthpiece of the consumable 70. Referring to Fig. 6, an aerosol generating apparatus, which may be implemented in accordance with any of the preceding examples, is shown. The aerosol generating apparatus 1 comprises a housing 84 that has a longitudinal direction of extension 96 depicted by the upward pointing arrow. The aerosol generating apparatus 1 comprises a top side 53, a bottom side 88, a front side 90 and a back side 92. In the top portion of the housing 84 at the top side 53, a cavity 86 is provided for receiving a consumable. Due to the orientation of the aerosol generating apparatus 1 depicted in Fig. 6, the cavity 86 itself is not visible. The aerosol generating apparatus 1 generally resembles the aerosol generating apparatus of Fig. 5, exemplarily comprising an actuator 55 and a plurality of lights 57. However, it should be understood that the general embodiment of the aerosol generating apparatus 1 may be different, e.g., may have more, less, no or a different number of lights 57 and more or less actuators 55.

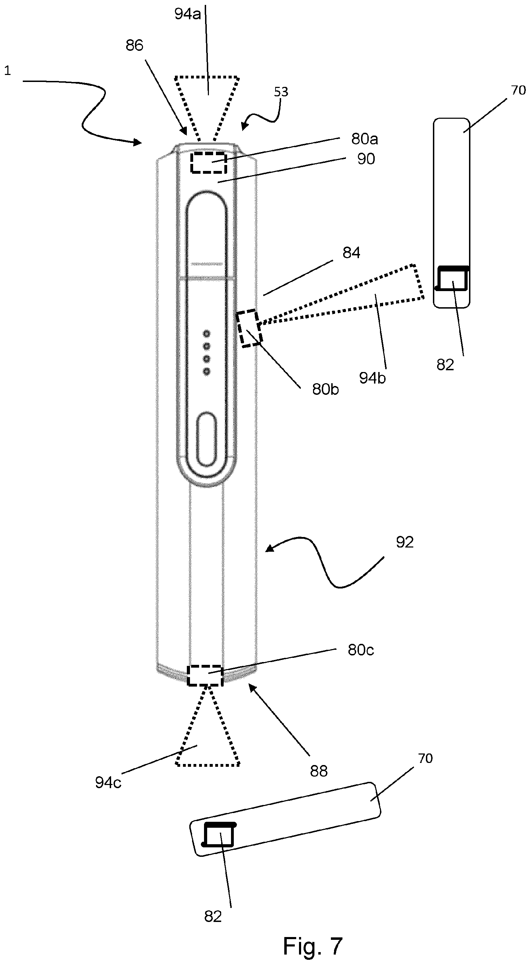

Referring to Fig. 7, the aerosol generating apparatus 1 is depicted in further detail. The aerosol generating apparatus 1 exemplarily is depicted with three example embodiments of information readers 80. A first example of an information reader is information reader 80a, which is arranged within the cavity 86 and has a reading direction 94a exemplified by the dashed cone exiting the cavity 86 at the top side 53. A second example of an information reader is information reader 80b, which is arranged at the back side 92 of the housing 84, essentially pointing away from the housing 84 in a perpendicular direction as exemplified by the depicted dashed cone of reading direction 94b. In Fig. 7, the cone of reading direction 94b is indeed pointing towards the right side, however this is only because of the perspective used in Fig. 7 and should not be understood, that reading direction 94b goes to the right side of the aerosol generating apparatus 1. Indeed, reading direction 94b should be understood as being parallel to a vector between the front side 90 and the back side 92, which vector is perpendicular to the direction of longitudinal extension 96. A third example of an information reader is information reader 80c, which is arranged at the bottom side 88 of housing 84 and is pointing downwards from the housing 84 as exemplified by the dashed cone of reading direction 94c.

Essentially, the reading direction 94a and 94c are generally parallel to the direction of longitudinal extension 96 whereas the reading direction 94b is generally perpendicular to the direction of longitudinal extension 96 pointing away from the back side 92 of the housing 84 and thus away from a user holding the aerosol generating apparatus 1. Thereby the aerosol generating apparatus 1 remains operable by the user, e.g., by operating actuator 55, when reading machine-readable information by in the reading direction 94b. In Fig. 7, the information readers 80a,b,c are visibly depicted as dashed boxes, and it is to be understood that the information readers 80a,b,c are indeed arranged within the housing 84 of the aerosol generating apparatus 1. The housing 84 may have appropriate openings arranged adjacent to the information readers 80a,b,c so to provide an aperture for the cones of reading directions 94a,b,c to acquire machine-readable information 82 arranged outside of the housing 84.

While the embodiment of Fig. 7 is depicted with three information readers 80a,b,c, it should be understood that a specific implementation of the aerosol generating apparatus 1 may comprise only a sub-set of one or two of the depicted information readers 80a,b,c, e.g., only information reader 80a, 80b or 80c, 80a and 80b, 80a and 80c, and 80b and 80c.

Depicted in Fig. 7 are two consumables 70, each comprising machine-readable information 82. An information reader 80a,b,c can acquire the machine-readable information 82 when it is arranged in one of the cones of one of the reading directions 94a,b,c. The aerosol generating apparatus 1 may thus acquire the machine-readable information 82 by using one of the information readers 80a,b,c, and may thereby receive information on a specific mode of operation the aerosol generating apparatus 1 should assume in order to allow consumption of the specific consumable 70, bearing the machine-readable information 82. In Fig. 7, only the information reader 80b and 80c are depicted as acquiring the machine-readable information 82. Naturally, the information reader 80a is equally capable of acquiring the machine-readable information 82.

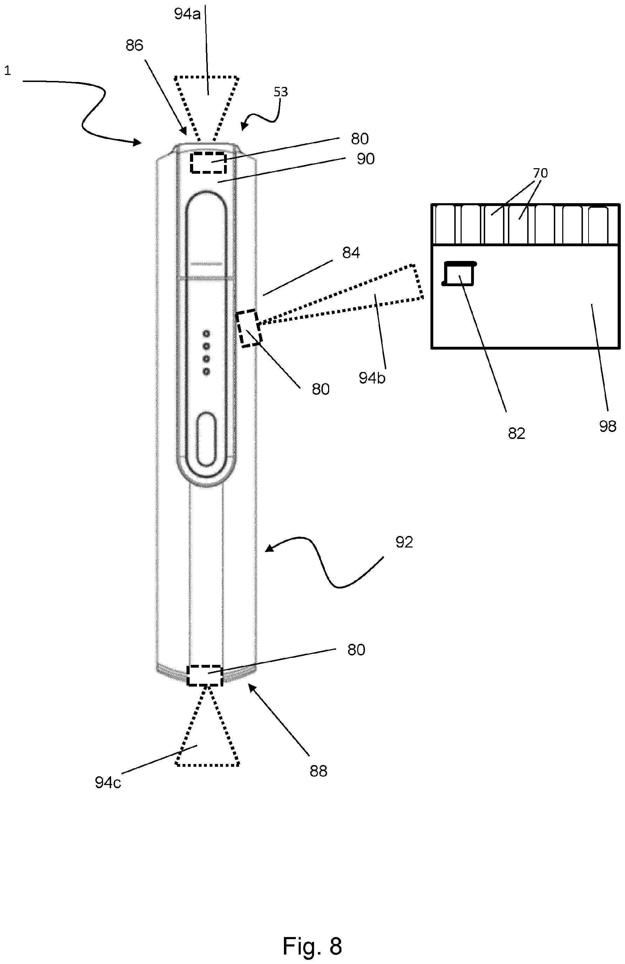

Referring to Fig. 8, a pack 98 of consumables 70 is depicted bearing the machine-readable information 82. It is thus conceivable that an information reader 80 is acquiring the machine-readable information 82 not on a per-consumable basis but on a per-pack-of-consumables basis. Likewise, it is conceivable that each consumable 70 of the pack 98 of consumables comprises machine-readable information 82 in addition to the pack 98. Thereby, by reading the machine-readable information 82 from the pack 98 of consumables, the mode of operation of the aerosol generating apparatus 1 may be parameterized, to adapt the mode of operation of the aerosol generating apparatus 1.

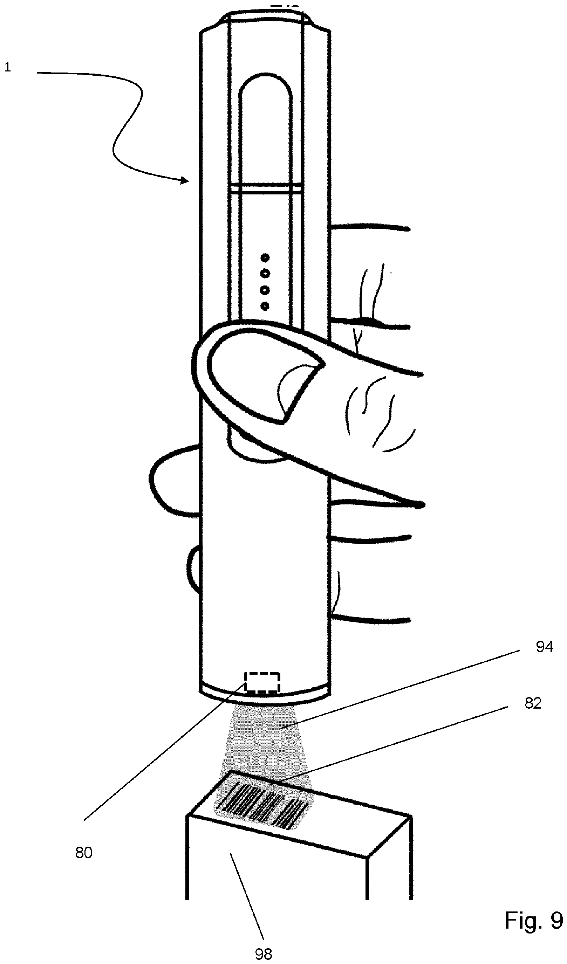

Referring to Fig. 9, an exemplary embodiment showing a user holding an example aerosol generating apparatus during normal use and acquiring machine-readable information according to the present disclosure is depicted.

Fig. 9 shows the position and orientation of an information reader 80. The information reader 80 is exemplarily arranged at a bottom side of the aerosol generating apparatus 1, so that holding of the aerosol generating apparatus 1 is not impeding or prohibiting the reading operation, i.e., the acquisition of the machine-readable information 82.

In Fig. 9, a pack 98 of consumables is depicted, comprising the machine-readable information 82. Reading direction 94, i.e., the cone of reading of the information reader 80 for reading the machine-readable information 82 emanates from the bottom part of the aerosol generating apparatus 1 towards the machine-readable information 82. In particular, Fig. 9 shows the ability of the information reader 80 to read or acquire the machine-readable information 82 without requiring a particular extraordinary action or behaviour by the user with regard to the aerosol generating apparatus 1. This is achieved by the information reader 82 that is arranged within the housing of the aerosol generating apparatus 1 so not to be covered by a body part of the user or so arranged that a body part of the user does not interfere with the acquisition process when the user is holding or operating the aerosol generating apparatus 1 as intended by the manufacturer.

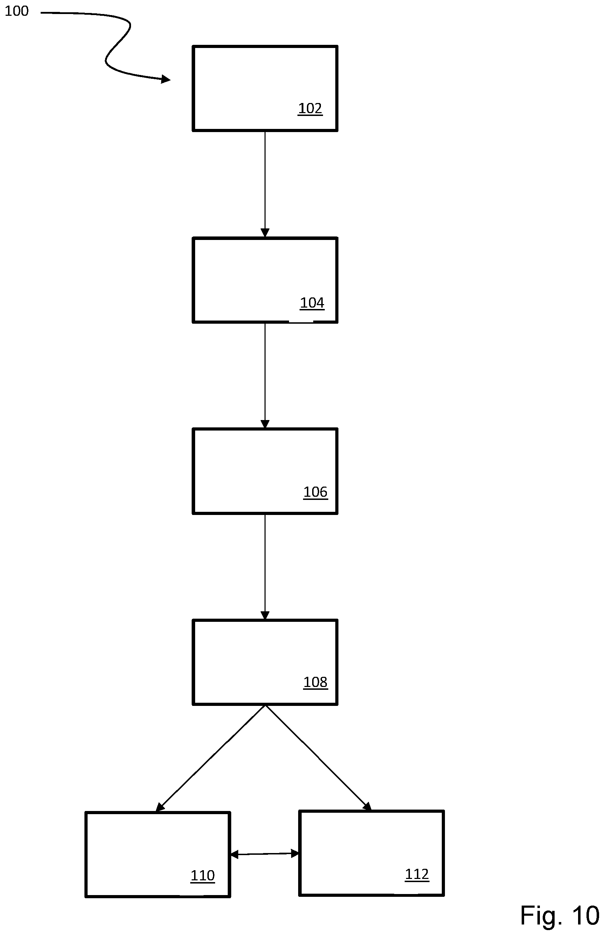

Referring to Fig. 10, a method 100 of operating an aerosol generating apparatus is depicted. Method 100 comprises inserting 102 a consumable comprising machine-readable information in a first state into the cavity of the aerosol generating apparatus, wherein the machine-readable information is unreadable in the first state, initiating 104 a heating or pre-heating operation to apply heat to the consumable so that the machine-readable information transitions from the first state into a second state, wherein the machine-readable information is readable in the second state, removing 106 the consumable from the cavity, and reading 108 the machine-readable information. The method may further comprise the aerosol generating apparatus 1 setting a mode of operation 110, after reading the machine-readable information 82, and/or enabling activation 112 of the operation of the aerosol generating apparatus 1 after reading the machine-readable information 82.

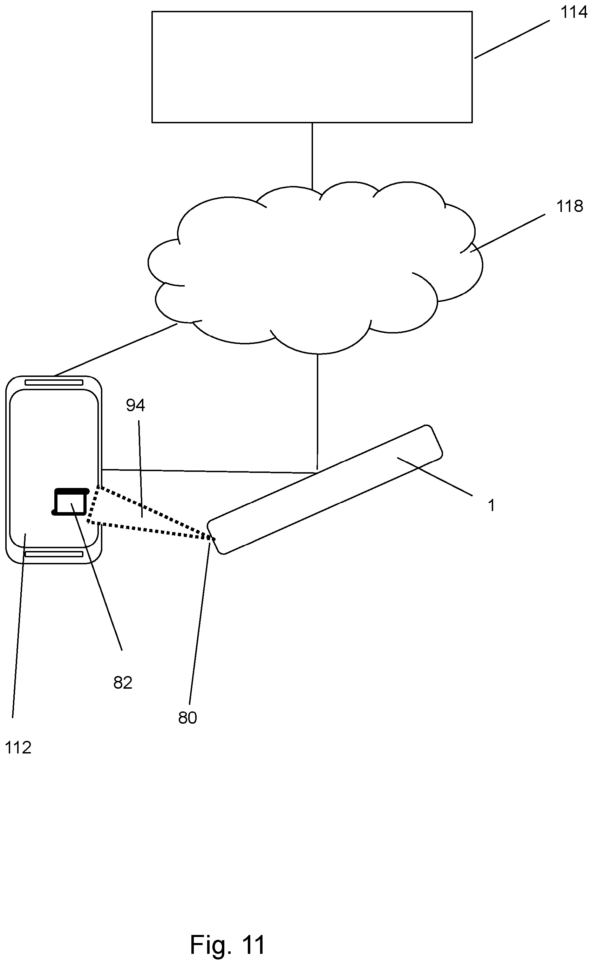

Referring to Fig. 11, an exemplary embodiment of an aerosol generating apparatus with communication capability according to the present disclosure is depicted.

Fig. 11 includes a mobile device 112, an application server 114 as well as the aerosol generating apparatus 1. Mobile device 112 and the aerosol generating apparatus 1 may be communicatively connected, as indicated by the black lines. Mobile device 112 and the aerosol generating apparatus 1 may be communicatively connected by a direct communication connection and/or by a communication connection via a network 118, e.g. the Internet.

In this example, aerosol generating apparatus 1 may be configured to communicate wirelessly, e.g. via Bluetooth^{™}, NFC or RFID technology with the mobile device 112, in particular with an application (or "app") installed on the mobile device 112, via a wireless interface included in the aerosol generating apparatus 1 and via a wireless interface included in the mobile device 82. The mobile device 82 may be a mobile phone, for example. The application on the mobile phone may be configured to communicate with the application server 114, via network 118. The application server 114 may utilise cloud storage, for example.

The network 118 may include a cellular network and/or the internet.

In other examples, the aerosol generating apparatus 1 may be configured to communicate with the application server 114 via a connection that does not involve the mobile device 112, e.g. via acellular connection, a narrowband internet of things ("NB-loT"), a WiFi connection or satellite connection. In some examples, the mobile device 112 may be omitted.

A skilled person would readily appreciate that the mobile device 112 may be configured to communicate via the network 118 according to various communication channels, preferably a wireless communication channel such as via a cellular network (e.g. according to a standard protocol, such as 3G or 4G) or via a WiFi network.

The app installed on the mobile device 112 and the application server 114 may be configured to assist a user with managing their aerosol generating apparatus 1, based on information communicated between the aerosol generating apparatus 1 and the app, information communicated directly between the aerosol generating apparatus 1 and the application server 114, and/or information communicated between the app and the application server 114.

The aerosol generating apparatus 1 may acquire machine-readable information 82 displayed on a screen of the mobile device 112. The machine-readable information 82 displayed on the mobile device 112 may be used to specific machine-readable information indicating an eligibility of a particular user to use the aerosol generating apparatus 1, e.g. to consume consumables with or without nicotine or tobacco. The machine-readable information may be retrieved from the application server 114, e.g., by access of the app on the mobile device 112 to the application server 114.

## Claims

1. Aerosol generating apparatus (1) for generating an aerosol from a consumable, comprising
a cavity (86) adapted for receiving a consumable (70), and
an information reader (80) adapted for reading machine-readable information (82) arranged outside of the cavity (86) when being read by the information reader (80).

2. Aerosol generating apparatus according to the preceding claim,
wherein the information reader (80) is arranged inside the cavity (86) and adapted to read machine-readable information (82) arranged outside of the cavity (86) when being read by the information reader (80), and/or
wherein the information reader (80) is arranged outside of the cavity (86).

3. Aerosol generating apparatus according to at least one of the preceding claims, further comprising a housing (84),
wherein the information reader (80) is arranged within the housing (84) and adapted for reading a machine-readable information (82) arranged outside of the housing (84).

4. Aerosol generating apparatus according to the preceding claim,
wherein the housing (84) has a top side (53), a bottom side (88), a front side (90) generally oriented toward a user when using the aerosol generating apparatus and a back side (92),
wherein the housing (84) has a longitudinal direction of extension between the top side (53) to the bottom side (92) of the housing (84), and
wherein the information reader (80) is arranged within the housing (84) and has a reading direction (94) that is generally parallel to the direction of longitudinal extension (96) or generally perpendicular to the direction of longitudinal extension (96), for example
wherein the information reader (80) is arranged at the bottom side (88) of the housing or at the back side (92) of the housing.

5. Aerosol generating apparatus according to at least one of the preceding claims,
wherein the information reader is adapted to read a machine-readable information (82) while the aerosol generating apparatus is positioned in the hand of a user of the aerosol generating apparatus (1) during normal use.

6. Aerosol generating apparatus according to at least one of the preceding claims,
wherein the aerosol generating apparatus (1) is adapted to set a mode of operation dependent on reading the machine-readable information (82).

7. Aerosol generating apparatus according to at least one of the preceding claims,
wherein the aerosol generating apparatus (1) is adapted to store the read information or information for setting a mode of operation acquired by reading the machine-readable information (82).

8. Aerosol generating apparatus according to at least one of the preceding claims,
wherein the aerosol generating apparatus (1) is arranged so that different modes of operation are selectable, for example modes of operation acquired by reading the machine-readable information (82).

9. Set consisting of an aerosol generating apparatus according to at least one of the preceding claims and a consumable (70) or a pack of consumables (98),
wherein the aerosol generating apparatus (1) is arranged to acquire the machine-readable information (82) from the consumable (70) or the pack of consumables (98), and to set a mode of operation of the aerosol generating apparatus (1) adapted to the consumable(s) (70) dependent on the machine-readable information.

10. Set according to the preceding claim,
wherein the machine-readable information (82) is indicative of a mode of operation of the aerosol generating apparatus (1), and/or of whether the or each consumable (70) is counterfeit or genuine.

11. Set according to claim 9 or 10, wherein the consumable (70) comprises machine-readable information (82) in a first state where the machine-readable information is unreadable by the information reader (80), and
wherein the machine-readable information (82) is arranged to transition to a second state where it is readable by the information reader (80) by application of heat, for example by a heating or pre-heating process, when the consumable (70) is inserted in the cavity (86).

12. Method of operating an aerosol generating apparatus (1) according to at least one of claims 1 to 8,
wherein the aerosol generating apparatus (1), upon reading machine-readable information (82) on a consumable (70) or a pack of consumables (98) is arranged to set a mode of operation of the aerosol generating apparatus (1) adapted to the consumable(s) (70) dependent on the machine-readable information (82).

13. Method (100) of operating a set according to claim 11, comprising the steps of
inserting (102) the consumable comprising machine-readable information in the first state into the cavity of the aerosol generating apparatus, wherein the machine-readable information is unreadable in the first state,
initiating (104) a heating or pre-heating operation to apply heat to the consumable so that the machine-readable information transitions from the first state into the second state, wherein the machine-readable information is readable in the second state,
removing (106) the consumable from the cavity, and
reading (108) the machine-readable information.

14. Method according to the preceding claim,
wherein, after reading the machine-readable information, the aerosol generating apparatus sets a mode of operation (110) dependent on the machine-readable information (82), and/or
wherein, after reading the machine-readable information, the aerosol generating apparatus, enables activation (112) of the operation of the aerosol generating apparatus.

15. Consumable (70) for an aerosol generating apparatus (1), comprising
machine-readable information (82) arranged on the outside of the consumable,
wherein the machine-readable information (82) is arranged to assume a first state and a second state,
wherein the machine-readable information (82) is invisible or unreadable in the first state,
wherein the machine-readable information (82) is visible or readable in the second state, and
wherein the machine-readable information (82) is arranged to transition from the first state to the second state by application of heat.
